Europäisches Patentamt

European Patent Office

Office européen des brevets

(11) Publication number : **0 472 753 B1**

# EUROPEAN PATENT SPECIFICATION

(45) Date of publication of patent specification :
07.06.95 Bulletin 95/23

(51) Int. Cl.⁶ : **G06F 15/16**

(21) Application number : **90116446.7**

(22) Date of filing : **28.08.90**

(54) **Multiprocessor system having selective global data replication.**

(43) Date of publication of application :
04.03.92 Bulletin 92/10

(45) Publication of the grant of the patent :
07.06.95 Bulletin 95/23

(84) Designated Contracting States :
DE FR GB IT

(56) References cited :
FR-A- 2 316 661
GB-A- 2 206 714
AFIPS CONFERENCE PROCEEDINGS,
Anaheim, CA, 16th - 19th May 1983, pages
557-564;S.L. LILLEVIK et al.: "A multiproces-
sor with replicated shared memory"

(73) Proprietor : **BULL HN INFORMATION
SYSTEMS ITALIA S.p.A.
Via Martiri d'Italia 3
I-10014 Caluso (Torino) (IT)**

(72) Inventor : **Bagnoli, Carlo
Viala Aretusa 30
I-20147 Milano (IT)**

(74) Representative : **Falcetti, Carlo et al
c/o JACOBACCI & PERANI S.p.A.
Via Visconti di Modrone, 7
I-20122 Milano (IT)**

## Description

The present invention relates to a multiprocessor system having selective global data replication.

It is known from european patent publications EP-A-0320607 and EP-A-0369265 that, in order to enhance the performance of a multiprocessor system in which a plurality of central processing units (CPU) communicate each with the other and with common resources (mass memories, I/O devices) through a systems bus, each CPU is provided with a local working memory to which it get access through a local bus without need of access to the system bus, because each local memory stores the information used by the related CPU.

This implementation does not exclude the access to the local memory of another CPU for information exchange.

Data jointly used by a plurality of CPUs are defined as "global" and are replicated in each one of the local memories.

The publication EP-A-0369265 in particular, describes the circuits and the procedures which assure consistency of the several copies of global data in all local memories and at the same time prevent the occurrence of dead locks in the access to global data.

A possible system dead lock is due to the execution of unseverable Read-Modify-Write (RMW) operations on global data and involves the reading of a global data, its modification in a CPU and the writing of the modified data replicated in the local memory of all the CPUs. According to publication EPA-0369265 deadlock is prevented by performing the global data read operation, when the read operation is part of an unseverable RMW operation, not in the local memory of the CPU where the data is requested, but in another CPU.

In this way the information is obtained through an access to the system bus.

Control over the system bus is held beginning with the read operation so that the other CPUs are prevented from obtaining access to the system bus and from interfering with the unseverable operation sequence which must be performed.

Clearly this is possible because any CPU may provide the requested information if the requested information is a global data.

In a recently filed european patent application, filed by the same applicant, a multiprocessor system is disclosed where global data are selectively replicated in the several local memories, as a function of the effective need by the several CPUs.

This has the purpose of saving memory space, by reducing the number of copies of global data which are present in the system and at the same time of reducing interferences among global data write operations and operations which may be locally performed by each CPU.

The global data, arranged by pages, are selectively replicated by pages, in the sense that each page of global data may be replicated in some of the CPUs and not in others.

Under these circumstances the execution of a global data read operation, within a RMC operation, performed in a CPU whatsoever, other than the CPU which requests the operation, is no more possible, unless it is known by the CPU requesting the operation in which of the CPUs the data to be read is effectively replicated.

Therefore the advantages resulting from a selective replication of the global data appear inconsistent with the advantages offered by the publication EP-A-369265.

The present invention overcomes this problem and provides a multiprocessor system where the global data are selectively replicated and at the same time it is possible to perform RMW operations on global data without the occurrence of deadlocks and without need to know in which of the CPUs the global data are effectively replicated.

This is obtained by means of an architecture and circuits which allow an agent CPU to perform a RMW operation on global data by referencing a CPU whatsoever in the system and through the system bus.

The architecture and the circuits of the invention further allow the agent CPU to detect, when a read command related to a RMW sequence, is already present on the system bus and deadlock occurrence can be excluded, the presence of such read command and to locally perform the read operation in the related local memory, ignoring the information received through the system bus.

The invention is carried out as claimed in claim 1.

The feature and the advantages of the invention will appear more clearly from the following description and the related drawings where:

- Figure 1 shows in block diagram a multiprocessor system having selective global data replication in accordance with the invention.
- Figure 2 shows the format of the addresses used in the system of Fig. 1.
- Figure 3 shows in block diagram a functional component of the system of Fig. 1, in the following named as isolation buffer.

- Figure 4 shows in block diagram two functional components of the system of Fig. 1, in the following named as interface and arbitration unit (INT & ARBT) and output block towards system bus (SBBOUT).
- Figure 5 shows in block diagram two functional components of the system of Fig. 1, in the following named as interface and arbitration unit (INT & ARBT) and input block to local bus from system bus (SBIN).

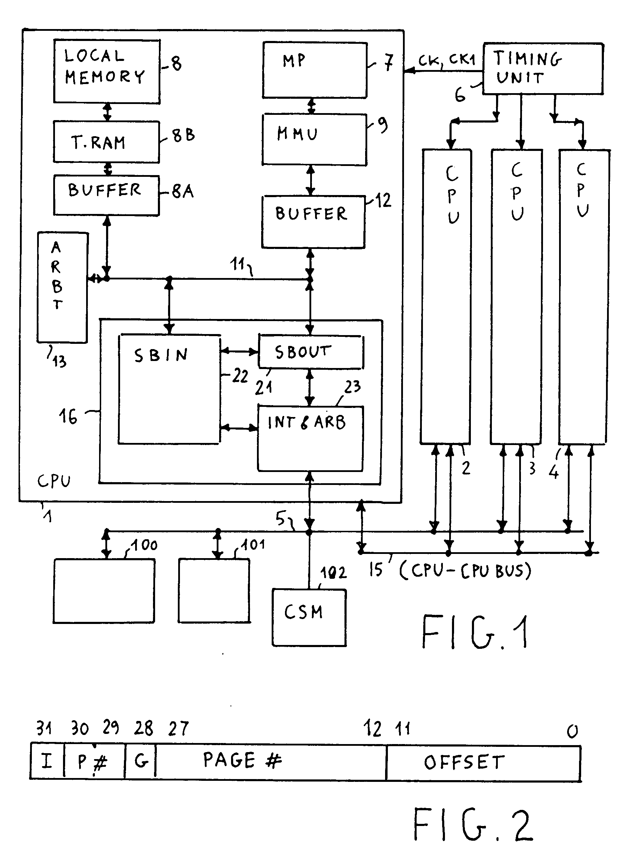

Figure 1 shows in block diagram a mutliprocessor system having selective global data replication in accordance with the present invention.

The system comprises four central processing units or CPUs 1,2,3,4. The CPUs communicate each with the others and with mass memories 100, I/O devices 101 and a central service module CSM 102 through a system bus 5.

The operation of the CPUs is clocked by a timing unit 6 which basically generates a first periodic clock signal CK and a second periodic clock signal CK1 having a period multiple of the one of CK and synchronous with CK.

The internal architecture of the several CPUs is described with reference to CPU1.

CPU1 comprises a processor or microprocessor MP7, a main memory address management unit MMU9, a local bus 11, a local memory 8, an address translation unit 8B (T.RAM) a local bus arbitration unit (ARBT) 13 and an interface module 16 which connects the local bus 11 to the system bus 5.

Even if MM9 is shown as blocks distinct from microprocessor MP7, it may be integral to MP 7 (as it is the case in the integrated circuits MOTOROLA 68030,68040).

The set MP7,MMU9, communicates with the local bus through an isolation buffer 12.

Likewise the local memory 8 communicates with the local bus 11 through an isolation buffer 8A.

The interface unit 16 basically comprises an output buffer 21 (SBOUT), an input block (SBIN) and an interface and arbitration unit 23 (INT & ARBT) for arbitrating control on the system bus.

Block 21 (SBOUT) is used to request access to the system bus, through block 23, in order to perform read/write operation on resources external to CPU1 and to put read/write operation requests on the system bus.

Block 22 (SBIN) is used to receive, through block 23 and from system bus, read/write operation requests to be transferred to the local memory.

The several CPUs 1,2,3,4 are interconnected by the system bus 5 (which may be a standard bus such as the one known as MULTIBUS II or (PSB) and by an auxiliary bus CPU-CPU BUS 15.

The auxiliary bus allows the several CPUs to know in real time the active/inactive state of the several CPUs and to exchange information on the occurred local execution of a global data write operation.

The features of this auxiliary bus are detailed in the european publication EP-A-0369265 and will be reconsidered in the following. The use of a standard bus such as the MULTIBUS II as system bus implies that any entity, such as the interface unit 23 of a CPU, obtains access to the system bus as "agent" and references another entity, for instance the interface unit of another CPU, of an I/O controller or of the central service module CSM.

The addressed entity must act as a "replier" and interact with the agent in order to perform the handshaking communication protocol used by MULTIBUS II.

Figure 2 shows the format of the addresses used in the system of Fig. 1, as they are generated by processor MP7 (and the corresponding processor of the other CPUs) or converted by a MMU (such as 9) departing from virtual addresses generated by the related processor in the same CPU.

Each address comprises 32 bits.

The most significant bit 31, named I, when asserted indicates that the addressed space is an internal space.

The internal space is a local memory space if bits 30,29 are deasserted and an I/O or register space if one of the bits 30,29 is asserted. For example bit 30 asserted and bit 29 deasserted may define a peripheral unit space.

If bit 31 is deasserted, the addressed space is a space external to the CPU and is considered as a memory space only.

In this case, bits 30,29 define the memory space as owned by the local memory of one of the four CPU by means of a CPU number (P#).

Bit 28, referenced as G, when the addressed space is a memory space has two important functions.

When asserted it indicates that the related address is a global data address.

When asserted and coupled with a write command it indicates that the write operation must be global, that is performed in the local memory of all CPUs.

When asserted it further indicates that the related address is an address conventionally defined as real, which must be converted in a physical address by using the translation unit 8B of Fig. 1.

3

If bit 28 is deasserted, the related address is already a physical memory address, does not require conversion and is related to an information local to one CPU (and identified by bits 31,30,29).

When the addressed space is a memory space, the bit field from bits 12 to 27 forms a page address PAGE# (one among 64K) and the bit field from Bit 0 to 11 forms an "offset" which does not change in the conversion of an address from virtual to real or physical and from real to physical.

The offsets define the location of the information byte within a page. By using this format for the addresses, the access to information in the system of Fig.1 occurs in the following way.

The information address, generated by processor 7 and in case converted by MMU9, is transferred to block 12 which, once received access to local bus by the arbitrating unit 13 and depending on the status of the most significant bits of the address, references either the local memory 8 or the interface module 16 and namely block 21.

The local memory 8 is selected in case the referenced space is an internal memory space and the referenced information is local (bit 31=1, bits 30,29=0, bit 28=0).

It is also selected in case of global data read (bit 28=1 coupled with a read command).

In all other cases, the interface module 16 is selected.

Thus if the address of the information to be read or written references an external space (or an I/O space), unit 23 obtains access to the system bus 5 and through the interface unit of the CPU or the I/O entity related to such external space, obtains or writes the information.

In case of global data write, block 12 gets access to the interface module 16 through local bus 11.

The interface module 16, once obtained access to the system bus, transfers on the system bus a global data write command, characterized by an address which references an external memory space as owned by any one of the CPUs (bit 31=0 bit 30/29=xx) and by the more the referenced information is global (bit 28=1).

All the interface modules such as 16 in the several CPUs, detect this address.

If the data has to be written, the interface module 16 obtains access to the local bus from arbitrator 13 and commands the write operation in the local memory (performed with the previous conversion of the real address in a physical address).

Once access to the local bus is obtained the interface module 16 may put a signal on the auxiliary bus 15. This signal indicates that the global data write operation has been locally performed.

If the data has to be trashed, the interface module 16 equally puts on auxiliary bus 15 the signals indicative of performed operation but the operation is performed in a dedicated local memory page or trash page or even a fictitious page.

As an alternative the operation is not performed at all.

In this way the CPU which has requested the global data write operation may detect if the request has been duly received and honoured by the active CPUs.

This is of essence to assure consistency of all the copies of the global data which is written.

Advantageously, in order to avoid dead locks and inconsistency and to minimize local bus occupation, the system makes use of the access mechanisms to the several resources described in the european publications EP-A-369264 and EP-A-369265.

These mechanisms may be summarized as follows.

Access to local bus is granted by arbiter 13 on the basis of a predetermined priority given to access requests which may be generated by local memory (LMRQ), by block 22 in the interface unit 16 (SBLM) or by block 21 (SBRQ).

Access to processor 7 is granted by default, that is if the other cited access requests are not present.

Correspondingly arbiter 13 generates the following granted access signals:

ENRLM: to local memory for reconnection to local bus following a LMRQ request from local memory
ENSB: access granted to block 22 (following SBLM request)
ENRSB: access granted to block 21 (SBOUT) for reconnection to local bus following a SBRQ request.
ENCPU: access granted (by default) to processor 7.

The used mechanism consists in the posting of write commands.

When access is granted to processor 7 and if a write command generated by processor 7 is present, block 12 get access to local bus 11 and by asserting a signal MPLM may post a write command, with related data and address, in block 8A and thereafter may free the local bus without waiting for completion of the write operation.

As an alternative, by means of signal MPSB asserted, block 12 may post the write command in block SBOUT 21, without waiting for the write command being transferred to the system bus and the operation performed.

Block 12 generates signal MPLM or MPSB as a function of the destination address of the write command.

In similar way, if a write command on the system bus has for destination the local memory 8 of CPU1, or if the write command is related to a global data, block 22 in CPU1 generates signal SBLM. When block 22 receives signal ENSB from arbitrator 13, it posts the write command in block 8A and releases the local bus without waiting for completion of the operation.

In case of read operations the used mechanism consists in the posting of the read command, exactly as in the case of write operations, and in the subsequent reconnection to the local bus.

The reconnection is requested by the entity (local memory or block 21) which must provide the read data.

Thus the local memory 8, once activated by a read command either by block 12 (MPLM) or by block 22 (SBLM), once the data is available, generates signal LMRQ and obtained access to the local bus by arbiter 13 (ENRLM) puts the data on the local bus.

Signal ENRLM is received by block 22 and block 12 too. These blocks, depending on their state may recognize themselves in a mutually exclusive way as destination of the data.

In the same way if a read command has been posted in block 21 SBOUT, on receipt of the read out data from the system bus, block 21 generates signal SBRQ and, once obtained access to the local bus by arbiter 13 (ENRSB), may put the read out data on the local bus.

ENRSB is received by block 12 too, which depending on its state may recognize itself as destination of the data and may transfer it to processor 7.

In a preferred embodiment of the invention, the same mechanisms are used to control selectively performed global write operations and RMW operations.

In order to control global write operations, block 12 generates signal MPSB and posts the command in block 21.

Block 21, in turns, instructs block 23 so as it obtains access to the system bus as agent and forwards the write command to a corresponding interface block of an active CPU, which acts as replier.

Once the global data write command is present on the system bus, it is a task of block 22 in all the active CPUs, to detect, based on the address present on the system bus, if the write operation is related to a global data or not.

In the case of RMW operations related to global data, block 12 asserts signal MPSB and posts the command in block 21.

Block 21 in turns instructs block 23 so that it can obtain access to the system bus as agent and send the read command (together with a system bus locking signal BSC1) to a corresponding interface block of an active CPU, which acts as a replier.

Being the first of the RMW operations a global data read and being uncertain if the repying CPU effectively has a copy of the requested global data, block 21 of the agent CPU must discard the data received from the replying CPU.

Instead logic circuits triggered by block 21 are provided which enable block 22 in the agent CPU to detect the read operation on the system bus as related to a global data RMW command and to control the read operation in the local memory of the agent CPU.

On reconnection of the local memory to the local bus, for transferring the local data, block 12 in the agent CPU has to identify itself as destination of the data, in substitution for block 22.

The description which follows provides more details on the structure of blocks 12,21,22,23 limited to features useful for understanding the invention and with reference to the circuits required to perform the above mentioned operations.

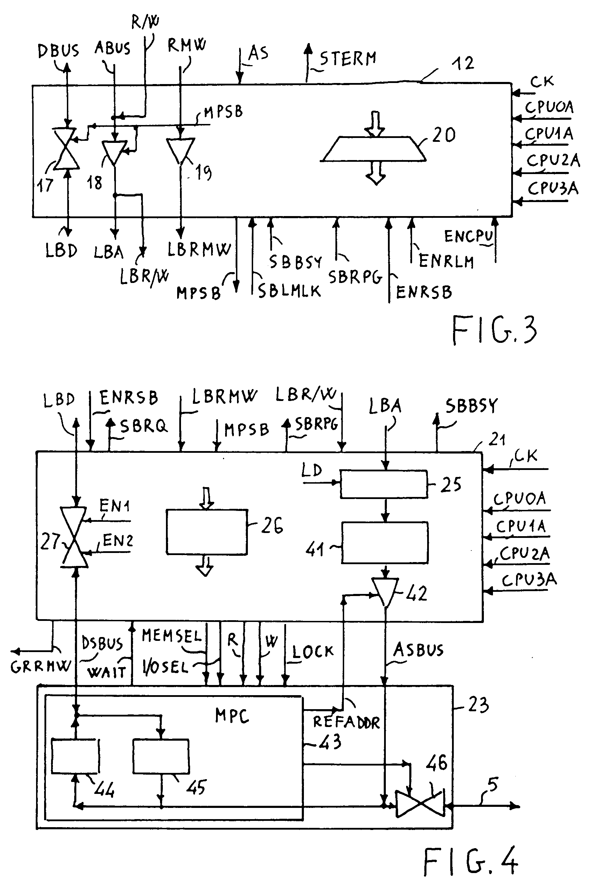

Figure 3 shows the isolation buffer 12 in block diagram.

Block 12 comprises a set of bidirectional gates 17 for connecting the data channel DBUS of processor MP7 to the a data channel LBD of the local bus, a set of tristate gates 18 for connecting the address channel ABUS of microprocessor MP7 to an address channel LBA of local bus 11 and a combinatory network 20.

Gates 18 further control the read/write command (signal R/W) issued by processor MP7.

Network 20 generates control signals for gates 17,18 and signals in output from block 12 as a function of the signals received from MP7 and from the local bus.

The leads and corresponding interface signals exchanged by block 12 with MP7 (through MMU9) are shown on the upper side of block 12.

The leads/signal interfacing with local bus are shown on the lower side of block 12.

For sake of clearness and concision the only signals are shown, which are useful for understanding the invention and which are required for performing the above mentioned operations.

The following list gives the meaning of the several signals:

DBUS: data in input/output from MP7

ABUS: real or physical addresses in output from MMU9

R/W: read command (R/W asserted) or write command (R/W deasserted) from MP7.

RMW: useverable RMW operation signal issued by MP7

AS: address strobe signal output from MMU9 and validating addresses and commands when asserted.

CK: periodic timing signal in output from unit 6

STERM: signal to MP7 indicating a performed write operation or data availability within the next following CK signal in case of read operation.

SBBSY: in output from block 21 indicates that block 21 is busy and cannot accept commands.

SBRPG: in output fro block 21 indicates tha block 21 has gained access to system bus for a read operation and is waiting for the read data.

LBD: data in input/output on the local bus.

LBA: addresses output on the local bus.

LBR/W: read/write command on local bus

LBRMW: locking signal on local bus for unseverable operations.

MPSB: signal output by block 12 indicating that block 22 and system bus are selected.

ENCPU: signal from arbiter 13, enabling block 12 to get access to the local bus.

ENRLM: signal from arbiter 13 indicating that the local memory is enabled to reconnect to the local bus for transferring data read out from local memory.

ENRSB: signal from arbiter 13 enabling the system bus, via block 21, to reconnect to the local bus for transferring a data read out from a space external to the CPU.

SBLMLK: from block 8A of local memory indicates that the local memory has been locked for RMW operations requested from system bus.

Block 12 further receives (right side of fig. 3) some signals CPU0A,CPU1A,CPU2A,CPU3A which define the active state (when asserted) or inactive state (when deasserted) of the several CPUs.

The gates 17,18 are enabled in output towards local bus by signal MPSB.

The gates 17 are enabled in output towards local bus by signal R/W asserted.

Block 12 obtains access to local bus by default, that is ENCPU is asserted by arbiter 13 if no other access requests to local bus are asserted and if the local bus is free.

The operation of block 12 and logical network 20 is described by the following equations for the operative cases relevant to the invention understanding.

In the equations, the letter $\underline{N}$ preceding the name of a signal is a negation or inversion symbol.

A) Global data write operation.

$$MPSB = ENCPU.AS.\overline{N}R/W.A28.A31.\underline{N}A30.\underline{N}A29.CPUMA.\underline{N}SBBSY$$

This equation indicates that block 12 gets access to local bus and selects block 21 if the operation to be performed is a write operation related to global data and if block 21 can receive commands (SBBSY deasserted) and further if the system environment is effectively a multi processor environment (CPUMA asserted).

CPUMA is a signal indicating that at least two CPUs are active in the system. For example CPUMA may be obtained in accordance with the following equation:

$$CPUMA = CPU0A.(CPU1A + CPU2A + CPU3A) + CPU1A.(CPU2A + CPU3A) + CPU2A.CPU3A$$

It is clear that in monoprocessor environment as it may result from the circumstance that one CPU only is active in the system, the global data are preferably treated as local data, with direct access to local memory even in case of write operation.

As soon as the write command is posted in block 21 the STERM signal is generated according to the following equation:

$$STERM = MPSB.\underline{N}R/W$$

B) Global data read in a RMW sequence.

$$MPSB = ENCPU.AS.R/W.A28.A31.\underline{N}A30.\underline{N}A29.RMW.CPUMA.\underline{N}SBBSY$$

This equation indicates that in case of RMW operation on global data the read command too is posted in block 21, rather than being sent to local memory.

However signal STERM which confirms availability of the read data is given in this case by:

$$STERM = ENRLM.RMW.R/W.AS.A28.A31.NA30.NA29.CPUMA.SBLMLK.SBRPG \qquad (3)$$

This equation indicates that confirmation of data available is sent to MP7 when local memory is reconnected to the local bus by assertion of ENRLM.

Block 12 identifies itself as destination thanks to the signal received from MP7, signal CPUMA and the two signals SBLMLK and SBRPG.

The joint assertion of SBLMLK and SBRPG assures that, being the local memory locked by a RMW request coming from the system bus and being the system bus controlled by block 21, the read operation performed by the local memory is the one requested by block 21 and no other.

Therefore the reconnection granted to local memory is related to the information requested by block 21 and MP7, through block 12.

Figure 4 shows in block diagram the interface and arbitration unit 23, block 21 and the interconnections between the two units, between the block 21 and the local bus on the upper side and between blocks 21,23 and system bus, auxiliary bus on the right side.

Block 21 exchanges data LBD with local bus 11, receives addresses and commands LBR/W, MPSB, ENRSB and output signals SBRQ (to arbitrator 13), SBBSY (to arbitrator 13 and block 12),SBRPG (to block 12) and a signal GRRMW to block 22.

Block 21 further receives the timing signal CK from unit 6 (Fig. 1) and the signals CPU0A,CPU1A,CPU2A,CPU3A, from the auxiliary bus 15.

Block 21 exchanges data (DSBUS) with the interface unit 23, outputs addresses (ASBUS), two mutually exclusive signals MEMSEL,I/OSEL (characterizing the operation to be performed), two distinct commands read command (R) and write command (W) and receives a signal WAIT (indicating that the requested operation is in course and which is deasserted, in case of read operation, immediately before the data availability and in case of write operation as soon as the data to be written has been put on the system bus) and a signal REFADDR enabling the transfer of an address on the system bus.

These are the only signals needed in the case, considered here, that the interface unit 23 essentially consists in a message passing coprocessor MPC manufactured as integrated circuit by the INTEL firm. Such coprocessor is described in the specifications MPC USER MANUAL, 1986 Intel Corporation, Santa Clara California.

Such specifications are referenced for more detailed information on the component.

Unit 23 comprises, in addition to coprocessor MPC 43, a set of control gates 46 which connect the coprocessor to the system bus 5 and which are controlled by the coprocessor.

Coprocessor 43 comprises two registers 44,45 latching the data exchanged with block 21.

Once activated (by the assertion of MSEL or I/O SEL) it manages in autonomous way the arbitration and communication protocol of the system bus.

Block 21 comprises a set of tranceivers 27, which control the connection of the local data channel LBD to the data channel DSBUS, an address latching register 25, a finite state logic 26 for generating control signals, a combinatory network (decoder) 41, connected to the output of register 25 and modifying the addresses in output from register 24 and a set tristate, isolation gates 42, having inputs connected to the outputs of decoder 41 and outputs connected to the system bus I/O ports of processor 43.

The following equations describes the conditions which cause the generation of the several control signals, which control a global data write operation, the only one of interest here.

$$MEMSEL = MPSB.LBA28.LBA31.\overline{NLBA30}.NLBA29$$
$$W = \overline{NLBR/W}.MPSB.CK + \overline{W}.\overline{SBBSY}$$
$$R = \overline{LBR/W}.MPSB.CK + R.SBBSY$$
$$SBBSY = MPSB.CK + SBBSY.\overline{NREFADDR} + SBBSY.WAIT \quad (5)$$
$$SBRPG = R.REFADDR + \overline{SBRPG}.\underline{N}(ENRLM.SBLMLK) \quad (4)$$
$$LOCK = LBRMW.MPSB + LOCK.\overline{LBRMW} + LOCK.N(REFADDR.W)$$
$$GRRMW = SBRPG.A28.NA31.CK1 + GRRMW.SBRPG$$

These equations are imposed by the timing requirements of the MPC coprocessor: MEMSEL must be asserted before the W command an W must remain asserted until deassertion of the WAIT signal.

WAIT is asserted with some delay as to receipt of the MEMSEL signal by coprocessor.

Hence two self sustainance terms are needed to hold SBBSY asserted.

SBBSY is the already considered signal indicating that block 21 is waiting for a data read from the system bus.

In the case of read operation within a RMW operation on global data it is deasserted with the assertion of ENRLM and SBLMLK rather than with the assertion of ENRSB, as it would happen in the normal case of data read from the system bus.

As to LOCK, it is asserted by the assertion of MPSB accompanied by LBRMW and self sustains for the whole sequence of unseverable operations, that is as long as LBRMW is asserted and, in case the last operation of the RMW sequence is a write, at least until the effective posting of the write operation on the system bus (REFADDR asserted). GRRMW is a signal sent to block 22 (SBIN) to indicate that the operation requested by block 21 (SBOUT) is a read in a sequence RMW related to global data and that such operation has to be performed in local memory.

Therefore it enables block 22 to recognize the command and address received through the system bus as information of its own pertainance. GRRMW is asserted when block 21 has already taken control over the system bus (REFADDR asserted) by the first clock CK1 of system bus and self sustains as long as SBRPG is asserted.

The gates 27 are enabled in output to block 23 by signal EN1=MPSB and in input to local bus 11 by signal EN2=ENRSB.

Register 25 is loaded by a command LD=MPSB.CK and the gates 42 are enabled by the assertion of REFADDR from MPC with the timing imposed by the system bus protocol.

The decoder 41 changes, in case of global data write operation, the address referencing an internal memory space in an address referencing an external memory space, specifically a memory space related to a processor CPUK other then the processor including decoder 41. The CPUK is choosen among the active ones. The suffix M in the following equations indicates a modified address bit.

$$A31M = A31.A29 + A31.A30$$

(A31 is set to 0 only if both bits A29 and A30 are zero)

$$A29M = A29 + A28.A31.\overline{NA29}.NA30.CPU1A.N\#1 + A28.A31.\overline{NA29}.NA30.CPU3A.N\#3$$

$$A30M = A30 + A28.A31.\overline{NA29}.NA30.CPU2A.NCPU1A.N\#2 + A28.A31.\overline{NA29}.NA30.CPU3A.N\#3$$

#0,#1;#2;#3 are signals asserted only in the processor which has the corresponding ordering number: this number may be assigned in well known way by an initialization procedure or simply by position of the several CPUs in a system housing.

The last two equations indicate that if the address in input and output from register 25 is not related to global data, the original bits A29,A30 are not changed.

If the address is related to global data, the original bits A29,A30 are zeroes, but are changed, depending on the active state of the several CPUs, and the number #Z of the agent CPUZ, so as to reference the memory space of a local memory in an active CPUK other than the agent. In case of global data write operation, block 21 asserts MEMSEL and sets in busy state by asserting SBBSY until block 23 deasserts WAIT. Block 23, once gained access to the system bus, asserts REFADDR and transfers the modified address, referencing another CPU, on the system bus.

Once the data has been transferred over the bus and confirmation has been received by the replying CPU, block 23 in the agent CPU deasserts WAIT.

As it will be seen in the following it is a task of block 22 in all CPUs to detect the write command.

In case of global data read operation within a RMW sequence, block 21 asserts MEMSEL and GRRMW and sets in busy status by asserting SBBSY until block 23 deasserts WAIT.

Block 23, after having obtained access to the system bus, asserts REFADDR and transfers the modified address on the system bus, together with a read and a lock command.

The modified address refers to another active CPU.

The read command is detected by the destination CPU which returns a data, not necessarily the requested one, to the agent CPU.

Block 23 in the agent CPU then deasserts WAIT.

Thanks to the GRRMW signal, the read command on the system bus is detected by block 22 in the agent CPU too.

Block 22 requests execution of the read operation in the related local memory which is held locked until the lock signal on the system bus is deasserted.

The lock signal on the system bus is deasserted only when signals LOCK and LBRMW are deasserted.

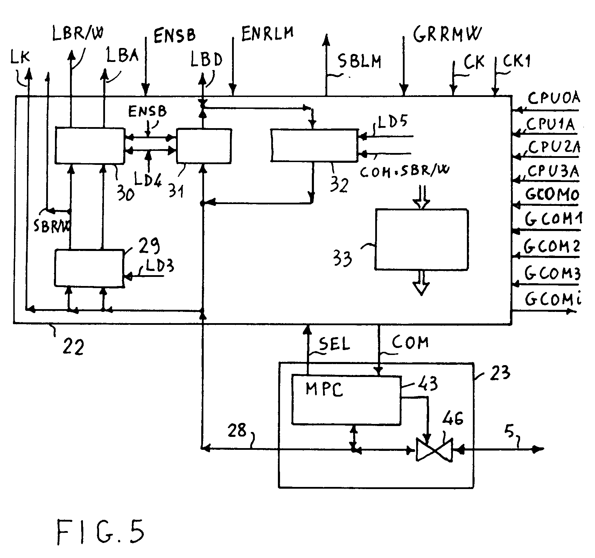

Figure 5 shows in block diagram the interface and arbitration unit 23, the block 22 and the interconnections of the two blocks as well the interconnections with local bus on one side and system bus, auxiliary bus on the other.

As already indicated, the interface unit 23 comprises the coprocessor MPC 43 and the transceivers 46.

The leads of the system bus intended for transferring data, addresses and commands, are connected, through such transceivers, to both block 43 and, by means of a channel 28, to block 22.

Channel 28 forms a bypass channel of the coprocessor 43.

Block 22 comprises a buffer register 29 for latching addresses and commands received from the bypass 28, an address and command register 30 downstream of register 29 and having the outputs connected to the local bus 11, a data registers 31 for data input to the local bus from the bypass channel 28, a data register 32 for data input to the bypass channel 28 from the local bus 11, a finite state logic 33 for generating control signals based on signals received from local bus, unit 43, bypass channel 28 and auxiliary bus 15.

Block 22 receives, from coprocessor 43, an activation signal SEL for the execution of a read/write command put on the system bus. Coprocessor 43 receives, from block 22, a signal COM, which indicates that block 22 is ready to complete the requested operation.

Block 22 exchanges, with local bus 11, data LBD (in output from register 31 or in input to register 32), ad-

EP 0 472 753 B1

dresses LBA (in output from register 30 or in input to register 48), outputs signals LBR/W,SBLM, LK directed to the local bus and receives commands ENSB, ENRLM (from arbitrator 13) and GRRMW (from block 21).

Block 22 further receives periodical signals CK and CK1 from the timing unit 6.

CK1 is used for timing the operation of the system bus.

In addition block 22 exchanges some signals with the auxiliary bus 15. Such signals will be considered in the following.

For an easier understanding of the operation and structure of block 22 it is preferable to first consider the case in which coprocessor 43 acts as "replier".

As it is known coprocessor 43 continuosly monitors the signals on the system bus and is capable of distinguishing the several phases of arbitration, control and data exchange in course over the system bus. It is further capable of detecting address fields, in particular bits A31,A30,A29, which may reference it as interface of a destination space.

When detecting such situation, coprocessor 43 asserts signal SEL and activates block 22.

SEL remains asserted until completion of the handshaking procedure on the system bus.

In order to complete the handshaking procedure the coprocessor 43 needs to receive command COM asserted from block 22.

Register 29 in block 22 may be defined as a freezing register for a transient situation occurring on the system bus, that is the control phase or cycle during which addresses and commands are present on the system bus.

The cycle is characterized by a bus signal BSCO asserted.

The loading command for register 29 is given by

$$LD3 = BSC0.CK1$$

The information loaded in register 29 remains latched until a new assertion of BSCO.

The loading operation of register 29 is independent of signal SEL and is the consequence of the protocol occurring on the system bus, any time an agent interacts with a replier.

Therefore register 29 is loaded in the interface unit of all CPUs and peripheral units connected to the system bus.

Register 30 and 31 are instead loaded by a command LD4 given by equation:

$$LD4 = SEL.\overline{NBSY}.\overline{NSEL1} \quad (1)$$

hence only if coprocessor 43 detects the address present on the system bus as related destination space (and consequently asserts SEL) and if the other terms of the equation are asserted.

The SEL assertion occurs when, in case of a write operation, the data to be written is already present on the system bus in lieu of the address.

BSY indicates that registers 30,31 (enabled in output by ENSB) are already busy and is defined by the equation.

$$BSY = LD4 + BSY.ENSB.CK$$

This equation indicates that BSY is asserted with the assertion of LD4 and self sustains until block 22 receives, from arbitrator 13, signal ENSB, synchronized by CK signal.

SEL1 is an auxiliary signal given by the equation:

$$SEL1 = SBLM + SEL1.\overline{N}(NSEL.CK1) \quad (2)$$

SEL1 is asserted with the assertion of the signal SBLM requesting connection of block 22 to local bus and self sustains until the first system bus clock CK1 during which SEL is deasserted.

In this way the term $\overline{N}SEL1$ in equation (1) assures that register 30,31 do not change their status until SEL is certainly deasserted, even if BSY has been deasserted.

Signal SBLM requesting access to the local bus is given by SBLM=BSY hence coincides with BSY.

Signal SBR/W is given by SBR/W=BSC6.

BSC6 is a control signal present on the system bus during the command phase and is latched in register 29.

If BSC6 (SBR/W) is asserted, it indicates that the requested operation is a read operation. SBR/W enables in output the register 32.

Signal LK is given by LK=BSC1

BSC1 is a lock signal present on the system bus for the whole time required to perform an unseverable sequence RMW.

LK, differently from the other signals coming from the system bus, is not latched in registers 29,30 and is directly transferred to the local bus.

In order to complete the communication protocol on the system bus the signal COM must be asserted.

In case of read operation or local data write operation COM is given by the equation:

$$COM = SBLM.\overline{NSBR/W}.NA28.\overline{NA31} + ENRLM.SEL1.\overline{NBSY}.SBR/W + COM.SEL1$$

9

This equation indicates that COM is asserted as soon as access request to local bus SBLM is asserted in case of a write operation related to local data and as soon as block 22 receives the reconnect enable signal ENRLM in case of read operation.

Signals SEL1 asserted and $\overline{\text{NBSY}}$ provide a block 22 status indication (read request issued and read operation pending) which enable to detect ENRLM as a response to the read request.

COM is self sustaining until SEL1 becomes deasserted.

In case of global data write operation COM is generated according to an equation which will be seen next.

The operation of block 22 is now considered in the case block 23 does not act as a relier.

Basically there are two cases:

A) Block 22 detects a global write command loaded in register 29, irrespective of the circumstance that block 23 is acting as relier or not.

B) Block 22 is triggered by signal GRRMW received from block 21.

In the case A) the command LD4 is given by the equation.

$$LD4 = A28.\overline{NA31}.\overline{NBSY}.\overline{NSEL1}.\overline{NBSCO}.CK1.\overline{NSBR}/W.$$

In other words LD4 is asserted even if control signal $\overline{\text{SEL}}$ is not asserted by block 23.

LD4 generates signals BSY and SBLM according to the already seen equations.

In every unit 22i where SBLMi has been asserted, the assertion of signal ENSBi causes the generation of a signal

$$GCOMi = A28.\overline{NA31}.ENSBi + GCOMi.\overline{NGLOBACK}$$

where $GLOBACK=(GCOMO+\overline{N\#0}).(GCOM1+\overline{N\#1}).(GCOM2+\overline{N\#2}).\overline{(GCOM3+N\#3)}$

In other words GCOMi is asserted on receipt of ENSBi and self sustains until each block 22 has received confirmation from all actives CPUs that the write operation has been posted.

Signal GLOBACK is used to assert signal COM in case of global data write operation according to the equation:

$$COM = \overline{NSBR}/W.GLOBACK + COM.SEL1$$

In this case COM is asserted with the posting of the global write operation in all the active CPUs and self sustains, in the CPU which acts as replier, until SEL is deasserted (equation 2).

In the other CPUs where the write operation has been posted, COM self sustains until receipt of signal CK1 next following deassertion of ENSB and SBLM (always in accordance with equation 2) because in these CPUS SEL has not been asserted (hence is deasserted).

As incidental remark it may be noted that in case of global data write operation every block 22 sends a signal COM asserted to the related interface unit 43.

However this signal is meaningful to the only unit acting as a replier and is ignored by all the others.

In case B) command LD4 is given by equation:

$$LD4 = GRRMW.\overline{NBSY}.\overline{NSEL1}$$

In other words, as soon as register 29 has been loaded with the address and the read command, the information may be copied into register 30 and the read operation may be requested of the local memory (LD4 enables to assert BSY and SBLM).

As soon as the requested global data is made available by local memory 8, through the interface block 8A, and the local memory is enabled by arbitrator 13 with the command ENRLM, block 12 detects the reconnect signal as of its own pertinence, based on equation (3) already seen, that is owing to the joint assertion of SBLM and SBRRG, in addition to address bits A31,A30,A29,A28 identifying a global data.

It is impossible that the reconnection signal be related to other information, therefore block 12 asserts STERM towards MP7 and transfers the requested global data to the processor MP7.

It must be noted that the global data moves from local memory to local bus and to MP7 without affecting blocks 21,22,23.

Block 21 waits for completion of the request send to system bus through block 23 and SBBSY remains asserted.

On the contrary SBRPG is deasserted (equation 4) together with GRRMW. When the CPU acting as replier provides a data, even if meaningless, in compliance with the received read request, the coprocessor MPC 43, in the block 23 of the agent CPU, deasserts WAIT and block 21 deasserts SBBSY (equation 5).

It may be concluded that the CPU where a global data read is requested, in a RMW context, starts two read operations:

- a first read operation which references, through the system bus, another CPU (where the global data may be meaningless).

  By this operation system bus control is taken, thus avoiding that any CPU other than the agent CPU may modify with a global data write operation the requested global data or may anyway interfere with the RMW sequence, thus establishing stale situations.

- a second read operation, which references, through the system bus, the local memory of the agent CPU. In the local memory of the agent CPU the requested global data is certainly present and meaningful. This read operation is requested by block 21 in the agent CPU and does not involve the system bus in the data transfer from local memory to processor MP7, involving the local bus only.

This operation is performed when the system bus has been already locked for performing the RMW sequence.

It is clear that the preceding description is related to a preferred embodiment, based on the use of a standard system bus (MULTIBUS II) and interface coprocessors MPC.

The use of different kinds of system busses or interface circuits may involve changes in the actual implementation, being retained the implementative concept of performing the global data read operation of a RMW sequence in the agent CPU which controls the read operation, the execution of such operation occurring only when the system bus is under control of the agent CPU, so as to avoid the occurrence of deadlock situations.

In this respect, it is worth to be mentioned that control over the system bus may be taken by addressing as a replier any unit connected to the system bus and not necessarily another CPU.

In particular the Central Service Module CSM, which generally is present in any system configuration, may be systematically selected, the Central Service Module being preset to detect global data read requests in a RMW sequence, and to provide a response to such requests for the purpose of system bus handshake protocol completion as a replier.

More generally the central service module may also be selected as a replier, in case of global data write operations, controlled over the system bus.

## Claims

1. Multiprocessor system having selective global data replication, comprising a plurality of central processing units (CPUs) each provided with a processor, a local memory and an interface unit communicating each with the other through a related local bus, a system bus through which the interface unit of each CPU may communicate with the interface unit of another one of said CPUs or another unit whatsoever connected to said system bus and provided with a related interface unit, and means in said interface unit of each of said CPUs for transferring on said system bus a global data write command, i.e. a command performed in the local memory of all CPUs;
said system being characterized in that each of said CPUs comprises:
   - first means for detecting a global data read modify write command sequence generated in the CPU it is connected to by said local bus and for requesting, through said system bus and in response to said detection, a global data read operation of another one of said units connected to said system bus, thereby taking control of said system bus,
   - second means, responsive to said detection and to said global data read request on said system bus, for transferring said read request to the related local memory and for providing the global data read out from said related local memory to the related processor, through said related local bus without transfer of said read out global data over said system bus.

2. Multiprocessor system as in claim 1 where said first means generates a signal (GRRMW) indicating that a global data read operation within a read-modify-write sequence has been requested through said system bus, and said second means is responsive to said signal.

## Patentansprüche

1. Multiprozessorsystem mit selektiver Vervielfältigung von globalen Daten, umfassend eine Vielzahl von Zentraleinheiten (CPUs), deren jede mit einem Prozessor, einem lokalen Speicher und einer Schnittstelleneinheit versehen ist, die miteinander über einen betreffenden lokalen Bus verbunden sind, einen Systembus, durch den die Schnittstelleneinheit von jeder CPU mit der Schnittstelleneinheit von einer anderen CPU oder einer anderen, mit dem Systembus verbundenen und mit einer betreffenden Schnittstelleneinheit versehenen beliebigen Einheit kommunizieren kann, und eine Einrichtung in der Schnittstelleneinheit von jeder CPU zum Übertragen eines globalen Datenschreibbefehls auf den Systembus, d.h. eines Befehls, der in dem lokalen Speicher von allen CPUs durchgeführt ist,
wobei das System dadurch gekennzeichnet ist, daß jede der CPUs aufweist:
   - eine erste Einrichtung zum Erfassen einer globalen Datenlesemodifizierschreibbefehlsequenz, die

EP 0 472 753 B1

in der durch den lokalen Bus verbundenen CPU erzeugt ist, und zum Anfordern über den Systembus und abhängig von der Erfassung einer globalen Datenleseoperation einer anderen Einheit der mit dem Systembus verbundenen Einheiten, um so eine Steuerung des Systembusses vorzunehmen,

- eine auf die Erfassung und die globale Datenleseanforderung auf dem Systembus ansprechende zweite Einrichtung zum Übertragen der Leseanforderung auf den betreffenden lokalen Speicher und zum Liefern der aus dem betreffenden lokalen Speicher ausgelesenen globalen Daten an den betreffenden Prozessor über den betreffenden lokalen Bus ohne Übertragung der ausgelesenen globalen Daten über dem Systembus.

2. Multiprozessorsystem nach Anspruch 1, bei dem die erste Einrichtung ein Signal (GRRMW) erzeugt, das anzeigt, daß eine globale Datenleseoperation innerhalb einer Lesemodifizierschreibsequenz durch den Systembus angefordert wurde, und bei dem die zweite Einrichtung auf das Signal anspricht.

## Revendications

1. Système multiprocesseur comportant la duplication sélective de données globales, comprenant une pluralité d'unités centrales de traitement (CPUs) chacune étant pourvue d'un processeur, d'une mémoire locale et d'une unité d'interface communiquant les uns avec les autres par l'intermédiaire d'un bus local connexe, un bus de système par l'intermédiaire duquel l'unité d'interface de chacune des CPUs peut communiquer avec l'unité d'interface d'une autre desdites CPUs ou d'une autre unité qui n'est pas reliée audit bus de système et pourvu d'une unité d'interface connexe, et un moyen qui se trouve dans ladite unité d'interface de chacune desdites CPUs pour transférer sur ledit bus de système une commande écrite de données globales, c'est-à-dire une commande réalisée dans la mémoire locale de toutes les CPUs, ledit système étant caractérisé en ce que chacune desdites CPUs comprend :

- un premier moyen pour détecter une séquence de commande écrite de données globales à lecture modifiée produite dans la CPU à laquelle elle est reliée par ledit bus local et pour demander, par l'intermédiaire dudit bus de système et en réponse à ladite détection, une opération de lecture des données globales d'une autre desdites unités reliées audit bus de système, prenant ainsi sous contrôle ledit bus de système,
- un second moyen, qui peut répondre à ladite détection et à ladite demande de lecture de données globales sur ledit bus de système, pour transférer ladite demande de lecture à la mémoire locale connexe et pour fournir les données globales lues à partir de ladite mémoire locale connexe au processeur connexe, par l'intermédiaire dudit bus local connexe sans transfert desdites données globales lues dans ledit bus de système.

2. Système multiprocesseur selon la revendication 1, où ledit premier moyen produit un signal (GRRMW) indiquant qu'une opération de lecture de données globales sans séquence d'écriture modifiée en lecture a été demandée par l'intermédiaire dudit bus de système, et ledit second moyen pour répondre audit signal.

12

FIG.1

| 31 | 30 | 29 | 28 | 27 | | | 12 | 11 | | | 0 |
|----|----|----|----|----|---|---|----|----|---|---|---|
| I | P # | | G | PAGE # | | | | OFFSET | | | |

FIG.2

FIG.3

FIG.4

FIG.5